# FASCICULE DE BREVET EUROPEEN

(11) **EP 2 739 182 B1**
(45) Date de publication et mention de la délivrance du brevet: **07.10.2015**
(21) Numéro de dépôt: 12758543.8
(22) Date de dépôt: 01.08.2012
(51) Int. Cl.: A45D 34/04, B65D 51/32, G01F 11/02, B05B 15/00

(54) **DISTRIBUTEUR DE PRODUIT FLUIDE**
FLÜSSIGMATERIALSPENDER
FLUID-MATERIAL DISPENSER

(30) Priorité: 01.08.2011 FR 1157046
(43) Date de publication de la demande: 11.06.2014
(73) Titulaire: Aptar France SAS, 27110 Le Neubourg (FR)
(72) Inventeur: BERANGER, Stéphane, F-27400 Surtauville (FR); MULLER, Patrick, F-27600 Saint Aubin Sur Gaillon (FR)
(74) Mandataire: CAPRI
(86) Numéro de dépôt international: PCT/FR2012/051819
(87) Numéro de publication internationale: WO 2013/017803

(56) Documents cités:
- EP-A1- 2 694 388
- EP-A2- 1 621 102
- DE-B- 1 166 496
- FR-A1- 2 727 670
- FR-A1- 2 924 696

## Description

La présente invention concerne un distributeur de produit fluide permettant d'appliquer un produit fluide sur une surface cible à l'aide d'un applicateur. Le transfert de produit fluide à partir de l'applicateur, qui fait partie intégrante du distributeur de produit fluide, s'effectue par contact de l'applicateur avec la surface cible, qui peut par exemple être la peau d'un utilisateur du distributeur. La présente invention s'applique plus particulièrement aux distributeurs applicateurs de produits de faible viscosité proches ou identiques à celle de l'eau, comme par exemple les parfums, les lotions, etc.

Dans l'art antérieur, de tels distributeurs applicateurs sont déjà connus pour prélever du produit fluide à partir d'un réservoir de produit fluide, l'applicateur est ensuite retiré du réservoir pour venir en contact avec la surface cible pour y appliquer du produit fluide. L'applicateur de produit fluide peut retenir le produit fluide par n'importe quel principe physique, comme par exemple la capillarité. On connait par exemple le document FR-2 924 696 qui décrit un distributeur de produit fluide comprenant un réservoir, une chambre de dosage de volume variable définissant une zone de prélèvement, un tube plongeur reliant le réservoir à la chambre de dosage, des moyens d'aspiration pour aspirer du produit fluide du réservoir dans la chambre à travers le tube plongeur et un applicateur de produit fluide apte à prélever le produit fluide aspiré dans la zone de prélèvement de la chambre. Plus en détail, le tube plongeur se prolonge à l'intérieur de la chambre de dosage, et plus particulièrement à l'intérieur de la zone de prélèvement, de sorte qu'au repos, lorsque la chambre de dosage est à son volume minimal, le prolongement du tube plongeur est enfoncé à fond dans la zone de prélèvement. Dans ce document, la zone de prélèvement se présente sous la forme d'une tubulure borgne ouverte à son extrémité inférieure et fermée à son extrémité supérieure. De plus, l'extrémité inférieure définit une lèvre de piston en contact de coulissement étanche à l'intérieur d'un fût qui est monté fixement sur le réservoir. De cette manière, lorsque le distributeur est au repos, le prolongement du tube plongeur s'étend à l'intérieur de la tubulure borgne formant la zone de prélèvement, qui elle-même est disposée à l'intérieur du fût de coulissement, qui lui-même est disposé à l'intérieur du réservoir. On se trouve alors en présence de quatre éléments disposés de manière concentrique. Cependant, une des formes de réalisation préférées de ce distributeur est de choisir les divers éléments constitutifs réalisés en matière plastique transparente, pour que l'utilisateur puisse voir la structure interne du distributeur. Cela confère au distributeur une certaine cristallinité qui améliore son aspect esthétique. Mais la présence du prolongement du tube plongeur à l'intérieur de la zone de prélèvement nuit fortement à l'effet transparent du fait de la multiplicité d'éléments concentriques. D'autre part, d'un point de vue plus fonctionnel, le prolongement du tube plongeur doit être réalisé avec une épaisseur de paroi relativement importante pour lui conférer une certaine solidité. Cette solidité est nécessaire étant donné que la tubulure formant la zone de prélèvement doit à chaque actionnement être engagée autour du prolongement. Du fait du diamètre relativement important du prolongement du tube plongeur, la tubulure de la zone de prélèvement doit être réalisée avec un diamètre relativement important, ce qui nuit d'une part à l'esthétique, et d'autre part à la capacité de retenue du produit fluide à l'intérieur de la zone de prélèvement par capillarité.

La présente invention a pour but de remédier aux inconvénients précités en définissant un autre principe de remplissage de la zone de prélèvement qui confère de plus un aspect esthétique amélioré.

Pour atteindre ce but, la présente invention propose un distributeur de produit fluide comprenant un réservoir de produit fluide contenant du produit fluide, une chambre d'aspiration de produit fluide de volume variable définissant un espace de prélèvement et d'application, un tube plongeur reliant le réservoir à la chambre au niveau d'un orifice d'injection définissant un axe d'injection, des moyens d'aspiration pour aspirer, au cours d'une phase d'aspiration, du produit fluide du réservoir dans la chambre à travers l'orifice d'injection, caractérisé en ce que l'espace de prélèvement et d'application présente un volume constant, l'orifice d'injection étant situé légèrement dans ou hors de l'espace de prélèvement et d'application, de sorte que le produit fluide est injecté sous la forme d'un jet axial dans l'espace de prélèvement et d'application et le remplit au moins partiellement sans que l'orifice d'injection ne pénètre dans l'espace. Avantageusement, l'espace de prélèvement et d'application est situé dans l'axe d'injection, l'espace définissant une extrémité ouverte proche de l'orifice d'injection et une extrémité fermée distante de l'orifice d'injection, l'espace communiquant avec le reste de la chambre et l'orifice d'injection par l'extrémité ouverte. L'orifice d'injection est situé hors de l'espace ou pénètre sur une très courte distance dans l'espace en étant toujours positionné à proximité de l'extrémité ouverte et à distance de l'extrémité fermée. Avantageusement, l'espace est formé par une tubulure borgne de volume constant solidaire d'un organe de préhension déplaçable selon l'axe d'injection. Avantageusement, la chambre d'aspiration comprend une coque définissant à son extrémité inférieure l'orifice d'injection, la tubulure étant disposée dans la coque. Avantageusement, la coque définit un fût de coulissement étanche dans lequel coulisse un piston solidaire de l'organe de préhension, de manière à créer une dépression dans la chambre en tirant axialement sur l'organe de préhension. Avantageusement, l'augmentation de volume de la chambre lors de la phase d'aspiration est légèrement supérieure au volume de l'espace. De préférence, la tubulure et la coque sont transparentes, de sorte que le produit fluide qui remplit l'espace est visible à travers la tubulure et la coque.

Ainsi, le distributeur de l'invention se distingue de celui du document FR-2 924 696 principalement par le fait que l'espace de prélèvement et d'application ne contient que du produit fluide et/ou de l'air, et jamais aucun autre élément du distributeur, étant donné que l'orifice d'injection ne pénètre pas ou presque pas à l'intérieur de l'espace de prélèvement et d'application. Cette architecture particulière a été déterminée de manière empirique, et le bon fonctionnement du distributeur a été constaté sans même comprendre le principe physique. Ce n'est qu'après des études approfondies qu'il a été constaté que l'espace de prélèvement et d'application se remplit non pas par dépression comme c'est le cas dans le document de l'art antérieur, mais par injection d'un jet sous pression à travers l'orifice d'injection à l'intérieur de l'espace de prélèvement et d'application. Il ne faut pas oublier que l'espace de prélèvement et d'application comporte une extrémité fermée de manière à définir un espace borgne : le produit fluide ne peut donc pas être aspiré à travers l'espace de prélèvement et d'application. Lorsque l'on manipule le distributeur, le remplissage de l'espace de prélèvement et d'application semble surprenant et mystérieux, car le principe physique de remplissage n'est pas évident. Des tests effectués sur des consommateurs ont montré que la manipulation du distributeur relève quelque peu du mystère, car le principe de remplissage de son espace de prélèvement et d'application est à priori incompréhensible. Et ce mystère est d'autant plus renforcé que la tubulure et la coque sont transparentes, de même que le réservoir de produit fluide. Ainsi, lorsque l'espace de prélèvement et d'application est visible, l'utilisateur peut assister de visu au remplissage de l'espace de prélèvement et d'application, sans toutefois pouvoir observer le jet axial de produit fluide issu de l'orifice d'injection, car ce jet est petit et rapide.

Grâce à cette architecture particulière, dans laquelle aucun élément du distributeur ne pénètre vraiment à l'intérieur de la zone de prélèvement et d'application, l'espace peut présenter une configuration sensiblement cylindrique axiale définissant un diamètre interne de l'ordre de 3 mm. D'autre part, l'espace présente une hauteur axiale de l'ordre de 1 cm.

Afin d'accentuer la transparence de la tubulure, celle-ci peut comprendre un bord inférieur libre arrondi vers l'intérieur définissant l'extrémité ouverte de l'espace. La coque peut également être formée avec une extrémité inférieure arrondie de sorte qu'aucune arête n'est visible à cet endroit. Seule l'extrémité ouverte de l'espace de prélèvement définit une arête au niveau de laquelle le produit fluide formera un ménisque.

Selon une caractéristique pratique avantageuse, l'extrémité ouverte de l'espace est situé axialement juste au-dessus de l'orifice d'injection en début de phase d'aspiration.

De préférence, l'orifice d'injection peut présenter un diamètre de l'ordre de 1 mm.

Selon un autre aspect de l'invention, le tube plongeur est invisible dans le produit fluide. Ainsi, l'utilisateur ne peut même pas apercevoir le tube plongeur qui relie le réservoir à l'espace de prélèvement et d'application.

Un principe de l'invention réside dans le fait de remplir l'espace de prélèvement et d'application à l'aide d'un jet de produit fluide sous pression, et non pas seulement au moyen d'une dépression. Cela permet d'une part de laisser l'espace exempt de toute autre pièce du distributeur et d'autre part d'augmenter la solidité du distributeur. Sur le plan esthétique, l'aspect est considérablement amélioré, étant donné que l'espace de prélèvement et d'application n'est rempli que de produit fluide et/ou d'air.

La présente invention sera maintenant plus amplement décrite en référence aux dessins joints donnant à titre d'exemple non limitatif un mode de réalisation de la présente invention.

Sur les figures :
La figure 1 a est une vue en section transversale verticale à travers un distributeur de produit fluide selon un mode de réalisation de l'invention,
La figure 1b est une variante de réalisation du mode de la figure 1 a,
Les figures 2, 3, 4, 5, 6 et 7 sont des vues similaires à celle de la figure 1 a illustrant les déférentes étapes d'un cycle opératoire complet du distributeur.

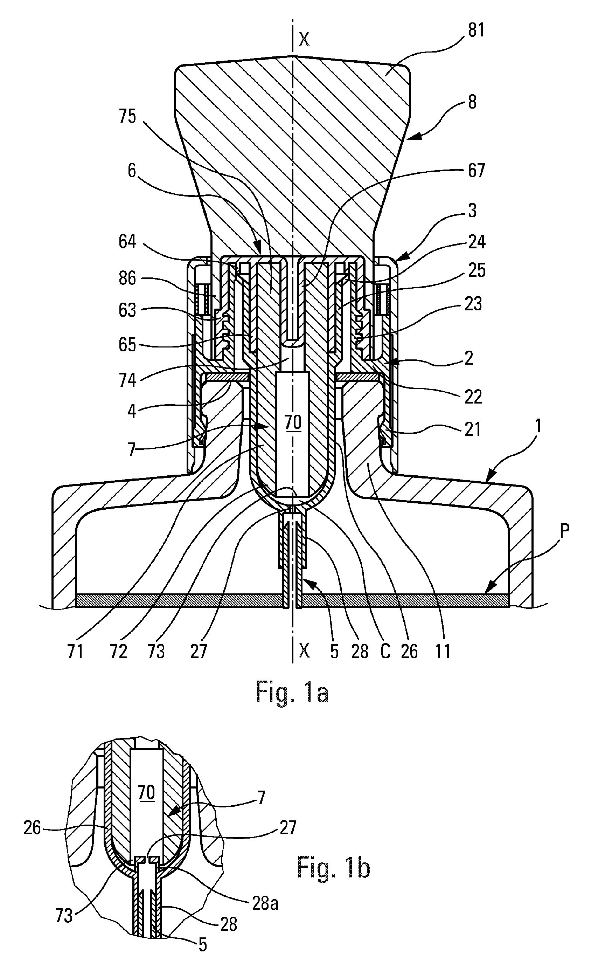

On se référera tout d'abord à la figure 1 a pour expliquer en détail la structure du distributeur selon un mode de réalisation de l'invention. Le distributeur de produit fluide comprend essentiellement trois éléments constitutifs, à savoir un réservoir 1, une bague 2 et un organe applicateur qui sert également d'élément de bouchage amovible.

Le réservoir 1 peut présenter une conception très simple, à savoir sous la forme d'un tube cylindrique avantageusement circulaire présentant un fond fermé et un col 11 définissant une ouverture. Le réservoir 1 peut être réalisé en n'importe quel matériau, comme par exemple du verre, une matière plastique appropriée, du métal, etc. Le réservoir est de préférence transparent, au moins au niveau de son col 11. Le réservoir présente de préférence une faible contenance de l'ordre de quelques millilitres. Il est destiné à être au moins partiellement rempli de produit fluide P.

La bague 2 est de préférence réalisée en matière plastique, par exemple par injection moulage. La bague 2 présente une symétrie de révolution selon un axe central X qui est également celui du réservoir 1. La bague 2 comprend une jupe d'accrochage 21 destinée à venir en prise autour du col 11 du réservoir de manière fixe et étanche. La jupe d'accrochage 21 peut présenter des profils destinés à venir se loger sous un renfort annulaire du col 11. En variante, non représenté, la jupe 21 peut présenter un filetage interne destiné à coopérer avec un filetage externe formé par le col 11. D'autres principes d'accrochage peuvent également être envisagés. La bague 2 comprend également un plateau annulaire 2 qui est destiné à écraser un joint de col 4 sur le bord annulaire du col 11. Pour des raisons esthétiques, la jupe 21 et le plateau 22 peuvent être habillés avec une frette d'habillage 3 qui masque avantageusement entièrement la bague 2. La frette 3 peut par exemple être réalisée en métal. La bague 2 se prolonge au niveau de la périphérie interne du plateau 22 par une section filetée 23 qui s'étend axialement vers le haut. La bague 2 se prolonge alors à nouveau vers le bas en définissant un fût de coulissement étanche 25 qui est disposé de manière concentrique à l'intérieur de la section filetée 23. Au niveau de la jonction entre la section filetée 23 et le fût de coulissement 25, la bague 2 forme un ou plusieurs trou(s) d'évent 24. La bague 2 se prolonge encore vers le bas sensiblement dans le prolongement du fût de coulissement 25 en formant une coque 26 qui s'étend à l'intérieur du col 11. La coque 26 présente une section principale sensiblement cylindrique circulaire et une partie inférieure arrondie en forme de dôme. A son point le plus bas, la coque forme une section d'emmanchement 28 dans laquelle est engagé un tube plongeur 5 qui s'étend dans le réservoir 1 jusqu'à proximité de son fond (non représenté). Le tube plongeur communique avec l'intérieur de la coque 26 à travers un orifice d'injection 27 formé au point bas de la coque 26 à l'intérieur de la section d'emmanchement 28. La taille de l'orifice d'injection peut être de l'ordre du millimètre.

La bague 2 peut être réalisée de manière monobloc, ou, en variante, par assemblage de plusieurs pièces séparées. La coque 26 peut être une pièce distincte qui peut être réalisée en une matière plastique transparente.

L'organe applicateur de l'invention est réalisé par l'assemblage de trois éléments constitutifs, à savoir un capot 6, une tubulure 7 et un organe de préhension 8. Ces trois pièces sont assemblées de manière définitive de manière à constituer une pièce unitaire. Sans sortir du cadre de l'invention, le capot 6 peut être réalisé de manière monobloc avec la tubulure 7 ou avec l'organe de préhension 8. La réalisation en trois pièces assemblées répond à des critères techniques de facilité de moulage et de montage, ainsi qu'à des critères esthétiques. Il est également possible de réaliser l'organe de prélèvement de manière monobloc.

Le capot 6 est une pièce, de préférence réalisée par injection de matière plastique, qui présente une symétrie de révolution autour de l'axe X, tout comme la bague 2. Le capot 6 comprend une douille 63 qui est filetée intérieurement et qui est destinée à venir en prise avec la section filetée 23 de la bague 2. Ainsi, la douille 63 peut être vissée sur, et dévissée de, la bague 2. Un point de dureté en fin de vissage permet d'indiquer à l'utilisateur que le vissage final est atteint. Le capot 6 définit également une lèvre d'éventation 64 qui est destinée à couper le passage entre les trous d'éventation 24 et l'extérieur. La lèvre peut aussi être remplacée par un joint. Le capot 6 définit également un piston 65 qui est destiné à venir se déplacer en coulissement étanche à l'intérieur du fût de coulissement 25 de la bague 2. Ainsi, lorsque l'on visse ou dévisse le capot 6, le piston 65 se déplace à coulissement étanche dans le fût 25. Enfin, le capot 6 définit un bouchon d'obturation 67 qui est engagé dans la tubulure 7, comme on le verra ci-après. Lorsque le capot 6 est vissé à fond sur la bague 2, la lèvre d'éventation 64 empêche toute communication entre les trous d'éventation 24 et l'extérieur. En revanche, lorsque le capot 6 est dévissé de la bague 2, la lèvre d'éventation 64 ne vient plus en contact avec la bague 2, et les trous d'éventation 24 trouvent un passage vers l'extérieur entre la section filetée 23 et la douille filetée 63. Etant donné que les trous d'éventation 24 sont en communication directe avec l'intérieur du réservoir 1, il est possible d'éventer le réservoir lorsque le capot 6 est dévissé de la bague 2. En revanche, lorsque le capot 6 est vissé à fond sur la bague 2, l'intérieur du réservoir 1 est isolé de l'extérieur.

La tubulure 7 peut être réalisée par injection moulage d'une matière plastique, de préférence transparente. Elle peut aussi être réalisée en métal (touché froid), verre, céramique, etc. La tubulure 7 définit une section inférieure 71 et une section supérieure 75 et présente un passage interne traversant qui est obturé dans la section supérieure 75 par le bouchon d'obturation 67 du capot 6. Dans sa section inférieure 71, la tubulure 7 définit un espace de prélèvement et d'application 70. Cet espace 70 présente une extrémité supérieure fermée 74 obturée par le bouchon 67 et une extrémité inférieure ouverte 73, de sorte que son volume est défini et constant. On peut également définir l'espace 70 comme un logement borgne obturé à son extrémité supérieure 74 et ouverte à son extrémité inférieure 73. La tubulure 7 est solidaire du capot 6 par engagement de sa section supérieure 75 dans le piston 65 et par engagement du bouchon 67 dans son passage traversant. La partie inférieure 71 de la tubulure à l'intérieur de laquelle est formé l'espace de prélèvement et d'application 70 s'étend librement et axialement vers le bas en faisant saillie en dessous du capot 6. On peut noter que la paroi externe 72 de la section inférieure 71 est arrondie de sorte que la seule arête définie à ce niveau est celle définissant l'extrémité inférieure ouverte 73 de l'espace 70. L'espace de prélèvement et d'application 70 peut présenter les dimensions suivantes : 3mm de diamètre et 10 mm de hauteur.

On peut remarquer que la section inférieure 71 de la tubulure 7 est engagée à l'intérieur de la coque 26 de la bague 2 en définissant des formes sensiblement complémentaires. Il est ainsi défini entre la coque 26 et la tubulure 7 une chambre de dosage C de volume variable à mesure que l'on visse et dévisse le capot 6 sur la bague 2. Cette chambre de dosage C est fermée à son extrémité supérieure par le contact étanche défini entre le piston 65 et le fût de coulissement 25. A son extrémité inférieure, la chambre de dosage C communique directement avec le réservoir 1 à travers l'orifice d'injection 27 et le tube plongeur 5. L'espace de prélèvement et d'application 70 fait partie intégrante de la chambre de dosage C et en constitue une partie de volume constant. On peut également dire que la partie de volume variable de la chambre de dosage C est constituée par tout ce qui est situé en dehors de l'espace 70.

Il faut surtout remarquer qu'aucun élément constitutif du distributeur ne pénètre à l'intérieur de l'espace 70. En effet, son extrémité ouverte 73 est située juste au-dessus de l'orifice d'injection 27. On verra ci-après de quelle manière l'espace 70 est rempli de produit fluide lors du retrait de l'organe de prélèvement.

Enfin, l'organe de préhension 8 est fixé sur le capot 6 au moyen d'un collier 86 qui vient en prise fixement autour de la douille filetée 63. L'organe de préhension 8 comprend une tête de préhension 81 par laquelle l'utilisateur peut saisir l'organe de prélèvement. En exerçant un couple de rotation sur la tête de préhension 81, le capot 6 est entraîné en rotation, de manière à le visser/dévisser de la bague 2.

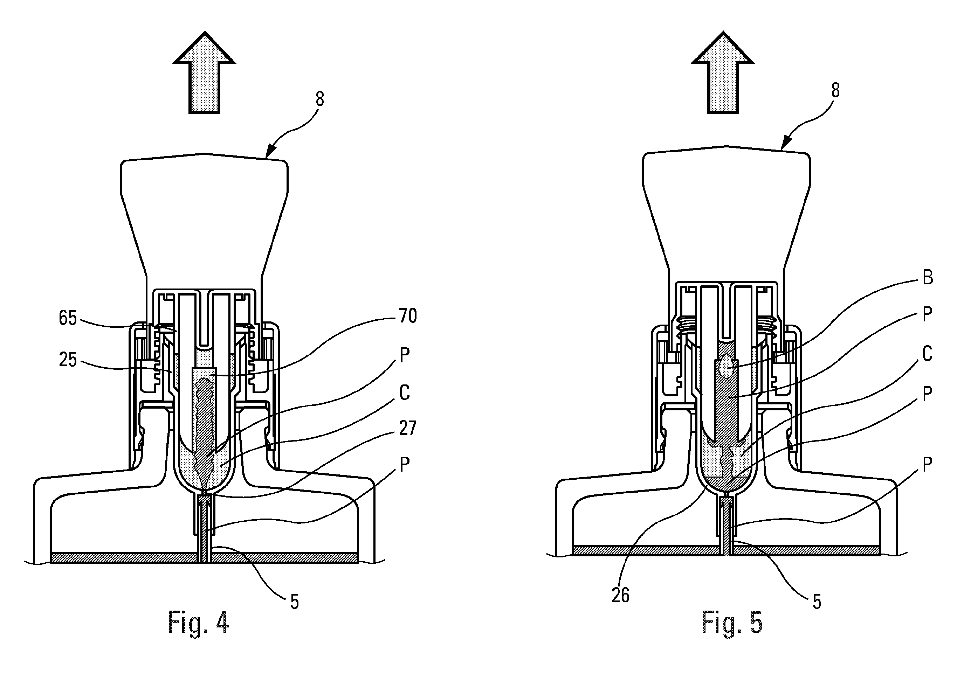

La figure 1b représente une légère variante de réalisation de la figure 1a, dans laquelle l'orifice d'injection 27 est formé à l'extrémité supérieure d'une petite tubulure d'extension 28a qui fait saillie dans la chambre C et pénètre légèrement dans l'espace 70. Cependant, on peut constater que l'orifice d'injection 27 est tout de même situé au niveau de l'extrémité ouverte 73 de l'espace 70. De plus, au moment où le produit fluide est injecté dans l'espace 70 (figure 4), l'orifice d'injection 27 est déjà extrait de l'espace 70 et éloigné de son extrémité ouverte 73. Le jet de produit fluide doit traverser une partie de la chambre C avant d'atteindre l'espace 70.

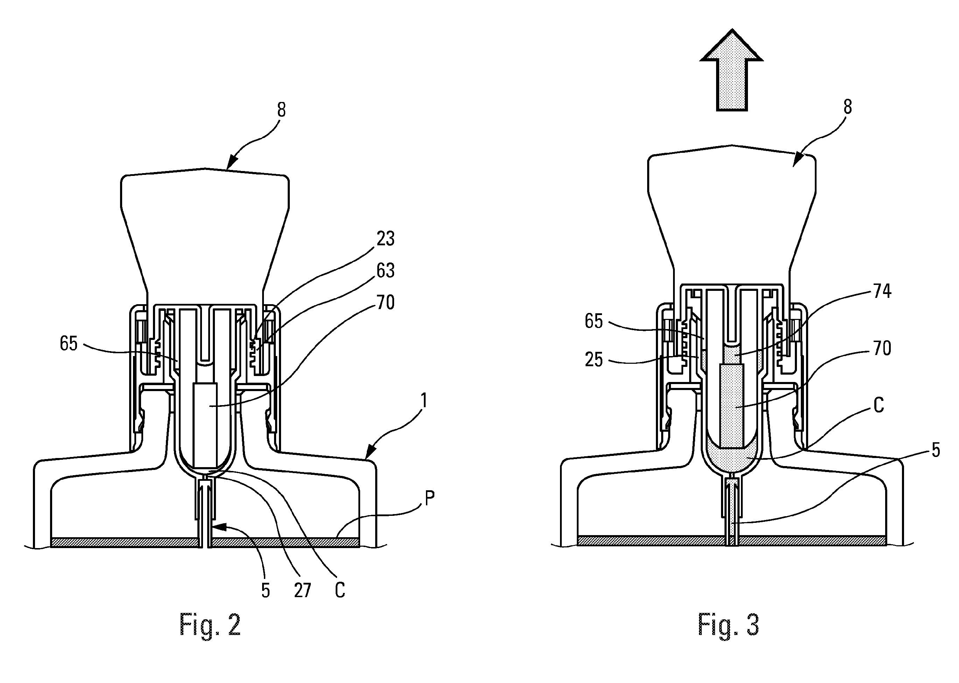

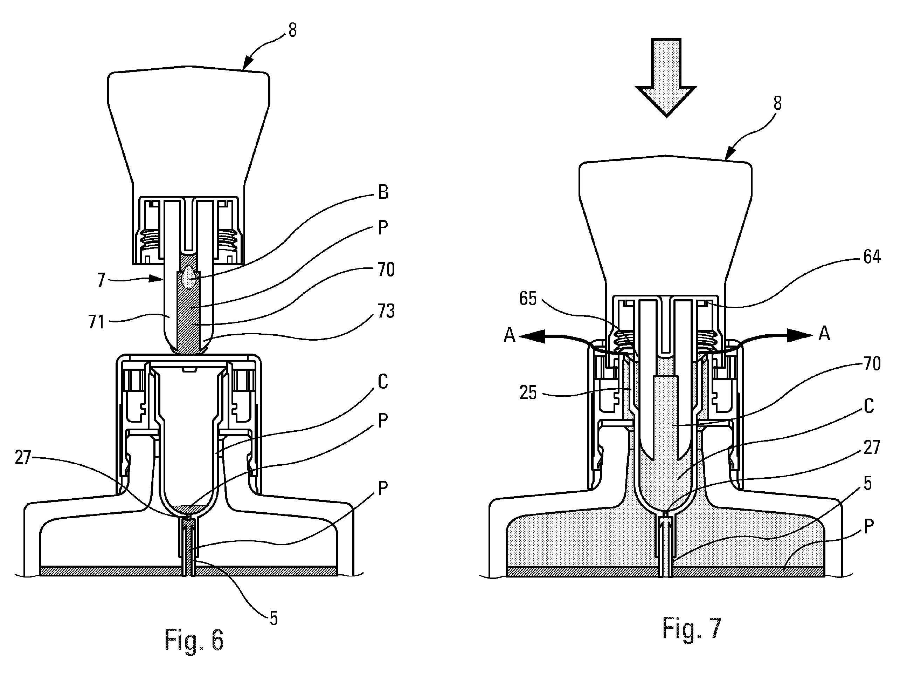

Un cycle opératoire complet sera maintenant décrit en référence aux figures 2 à 7. En partant de la figure 2 qui représente le distributeur dans le même état que sur la figure 1a, lorsque l'utilisateur dévisse l'organe de préhension 8 en maintenant le réservoir statique, le piston 65 va se déplacer à coulissement étanche à l'intérieur du fût 25. Ce déplacement relatif entre le piston et la bague 2 a pour effet d'augmenter le volume utile de la chambre de dosage C, ce qui crée une dépression dans la chambre C et le tube plongeur 5 : ceci est visible sur la figure 3 au niveau des zones grisées. En continuant à retirer l'organe de prélèvement de la bague 2, du produit fluide P en provenance du réservoir 1 est aspiré à travers le tube plongeur 5 et l'orifice d'injection 27 : ceci est représenté sur la figure 4 qui montre un jet axial de produit fluide P sous pression injecté dans espace de prélèvement et d'application 70 à travers la chambre C. L'espace s'éloigne de l'orifice d'injection, mais le jet est assez puissant pour pénétrer profondément dans l'espace. A cet instant, seul l'espace 70 reçoit du produit fluide. La figure 5 représente le distributeur juste avant que le piston quitte son contact coulissant étanche avec le fût 25 : la chambre C est alors encore en dépression (zones grisées). L'espace 70 est rempli de produit fluide P, à l'exception éventuelle d'une petite bulle d'air B qui se forme en partie haute. On peut également voir qu'une petite quantité de produit fluide P est présente au niveau de partie basse de la coque 26. Lorsque l'organe de prélèvement est complètement retiré de la bague, comme visible sur la figure 6, le produit fluide P injecté dans l'espace 70 est maintenu par capillarité : un ménisque est formé au niveau de l'extrémité inférieure ouverte 73 de l'espace 70. La petite bulle d'air B flotte dans l'espace 70. Une petite quantité de produit fluide P est toujours présente au niveau de partie basse de la coque 26.

Une fois le produit fluide répandu sur la surface cible à l'aide de la tubulure 7 et l'espace 70 ainsi vidé, le piston 65 est à nouveau inséré dans le fût 25, ce qui a pour effet de reformer la chambre de dosage C en l'isolant de l'extérieur. L'enfoncement du piston 65 dans le fût 25 a pour effet de créer une surpression dans la chambre C en diminuant son volume utile. La petite quantité de produit fluide P restée dans la chambre C est refoulée à travers l'orifice d'injection 27 et le tube plongeur 5 jusque dans le réservoir 1. Ainsi, il n'y a pas de produit fluide dans la chambre C : ceci est visible sur la figure 7. Le tube plongeur 5 est même vidangé de produit fluide en position de repos. Ainsi, le produit fluide stocké dans le réservoir n'est pas en contact direct avec l'extérieur. La bague 2 forme une première barrière offrant un seul passage de sortie à travers le tube plongeur. D'autre part, l'organe applicateur obture ce passage vers l'extérieur en formant une chambre de dosage de volume minimal en position de repos. On peut aussi remarquer que l'air qui est emprisonné dans le distributeur lorsque le piston 65 est à nouveau en contact étanche coulissant dans son fût 25 peut s'échapper à travers les trous d'évent 24 (flèche A) jusqu'à ce que la lèvre d'éventation 64 vienne couper le passage en vis de vissage. Le distributeur est alors à nouveau dans son état de la figure 2.

En réalisant la coque 26 et la tubulure 7 avec une matière plastique transparente, l'utilisateur peut observer le remplissage de l'espace de prélèvement et d'application sans en comprendre le principe qui est basé sur l'injection et non pas sur la seule aspiration. Cela confère au distributeur une part de mystère qui contribue à améliorer son image.

## Revendications

1. Distributeur de produit fluide comprenant :
- un réservoir de produit fluide (1) contenant du produit fluide (P),
- une chambre d'aspiration de produit fluide (C) de volume variable comportant un espace de prélèvement et d'application (70), cet espace (70) définissant une extrémité ouverte (73) et une extrémité fermée (74), l'espace (70) communiquant avec le reste de la chambre (C) par l'extrémité ouverte (73),
- un tube plongeur (5) reliant le réservoir (1) à la chambre (C) au niveau d'un orifice d'injection (27) définissant un axe d'injection (X),
- des moyens d'aspiration (25, 75) pour aspirer, au cours d'une phase d'aspiration, du produit fluide (P) du réservoir (1) dans la chambre (C) à travers l'orifice d'injection (27),
**caractérisé en ce que** l'espace de prélèvement et d'application (70) est formé par une tubulure borgne (7) de volume constant définissant l'extrémité ouverte (73) et l'extrémité fermée (74), l'orifice d'injection (27) étant situé au niveau de l'extrémité ouverte (73) de la tubulure borgne (7), de sorte que le produit fluide (P) est injecté sous la forme d'un jet axial dans l'espace de prélèvement et d'application (70) et le remplit au moins partiellement sans que l'orifice d'injection (27) ne pénètre dans l'espace (70).

2. Distributeur selon la revendication 1, dans lequel l'orifice d'injection (27) est situé hors de l'espace de prélèvement et d'application (70) ou légèrement dans l'espace de prélèvement et d'application (70).

3. Distributeur selon la revendication 1 ou 2, dans lequel la tubulure borgne (7) de volume constant est solidaire d'un organe de préhension (8) déplaçable selon l'axe d'injection (X).

4. Distributeur selon la revendication 3, dans lequel la chambre d'aspiration (C) comprend une coque (26) définissant à son extrémité inférieure l'orifice d'injection (27), la tubulure (7) étant disposée dans la coque (26).

5. Distributeur selon la revendication 4, dans lequel la coque (26) définit un fût de coulissement étanche (25) dans lequel coulisse un piston (65) solidaire de l'organe de préhension (8), de manière à créer une dépression dans la chambre (C) en tirant axialement sur l'organe de préhension (8).

6. Distributeur selon la revendication 5, dans lequel l'augmentation de volume de la chambre (C) lors de la phase d'aspiration est légèrement supérieure au volume de l'espace (70).

7. Distributeur selon l'une quelconque des revendications 4 à 6, dans lequel la tubulure (7) et la coque (26) sont transparentes, de sorte que le produit fluide (P) qui remplit l'espace (70) est visible à travers la tubulure (7) et la coque (26).

8. Distributeur selon l'une quelconque des revendications précédentes, dans lequel l'espace (70) présente une configuration sensiblement cylindrique axiale définissant un diamètre interne de l'ordre de 3 mm.

9. Distributeur selon l'une quelconque des revendications précédentes, dans lequel l'orifice d'injection (27) présente un diamètre de l'ordre de 1 mm.

10. Distributeur selon l'une quelconque des revendications 4 à 7, dans lequel la tubulure (7) comprend un bord inférieur libre (72) arrondi vers l'intérieur définissant l'extrémité ouverte (73) de l'espace (70).

11. Distributeur selon l'une quelconque des revendications précédentes, dans lequel l'extrémité ouverte (73) de l'espace (70) est situé axialement juste au-dessus de l'orifice d'injection (27) en début de phase d'aspiration.

12. Distributeur selon l'une quelconque des revendications précédentes, dans lequel l'espace (70) présente une hauteur axiale de l'ordre de 1 cm.

13. Distributeur selon l'une quelconque des revendications précédentes, dans lequel le tube plongeur (5) est invisible dans le produit fluide (P).

## Patentansprüche

1. Spender für ein fluides Produkt, umfassend:
- einen Behälter für ein fluides Produkt (1), welcher ein fluides Produkt (P) enthält,
- eine Ansaugkammer für fluides Produkt (C) mit variablem Volumen, die einen Entnahme- und Anwendungsraum (70) umfasst, wobei dieser Raum (70) ein offenes Ende (73) und ein geschlossenes Ende (74) definiert, wobei der Raum (70) mit der übrigen Kammer (C) durch das offene Ende (73) in Verbindung steht,
- ein Tauchrohr (5), das den Behälter (1) an einer Einspritzöffnung (27), die eine Einspritzachse (X) definiert, mit der Kammer (C) verbindet,
- Ansaugmittel (25, 75) zum Ansaugen, während einer Ansaugphase, von fluidem Produkt (P) des Behälters (1) in der Kammer (C) durch die Einspritzöffnung (27),
**dadurch gekennzeichnet, dass** der Entnahme- und Anwendungsraum (70) durch einen Blindstutzen (7) mit konstantem Volumen gebildet ist, der das offene Ende (73) und das geschlossene Ende (74) bildet, wobei sich die Einspritzöffnung (27) an dem offenen Ende (73) des Blindstutzens (7) befindet, so dass das fluide Produkt (P) in Form eines axialen Strahls in den Entnahme- und Anwendungsraum (70) eingespritzt wird und diesen zumindest teilweise füllt, ohne dass die Einspritzöffnung (27) in den Raum (70) eindringt.

2. Spender nach Anspruch 1, wobei sich die Einspritzöffnung (27) außerhalb des Entnahme- und Anwendungsraums (70) oder ein kleines Stück innerhalb des Entnahme- und Anwendungsraums (70) befindet.

3. Spender nach Anspruch 1 oder 2, wobei der Blindstutzen (7) mit konstantem Volumen einstückig mit einem Greifelement (8) gebildet ist, welches entlang der Einspritzachse (X) verschiebbar ist.

4. Spender nach Anspruch 3, wobei die Ansaugkammer (C) eine Schale (26) umfasst, die an ihrem unteren Ende die Einspritzöffnung (27) bildet, wobei der Stutzen (7) in der Schale (26) angeordnet ist.

5. Spender nach Anspruch 4, wobei die Schale (26) einen dichten Gleitzylinder (25) definiert, in welchem ein mit dem Greifelement (8) in einem Stück gebildeter Kolben (65) gleitet, so dass ein Unterdruck in der Kammer (C) gebildet wird, indem axial an dem Greifelement (8) gezogen wird.

6. Spender nach Anspruch 5, wobei die Vergrößerung des Volumens der Kammer (C) während der Ansaugphase etwas größer als das Volumen des Raums (70) ist.

7. Spender nach einem der Ansprüche 4 bis 6, wobei der Stutzen (7) und die Schale (26) transparent sind, so dass das fluide Produkt (P), welches den Raum (70) füllt, durch den Stutzen (7) und die Schale (26) sichtbar ist.

8. Spender nach einem der vorhergehenden Ansprüche, wobei der Raum (70) eine im Wesentlichen zylindrische axiale Konfiguration darstellt, die einen Innendurchmesser von 3 mm aufweist.

9. Spender nach einem der vorhergehenden Ansprüche, wobei die Einspritzöffnung (27) einen Durchmesser von 1 mm aufweist.

10. Spender nach einem der Ansprüche 4 bis 7, wobei der Stutzen (7) einen unteren freien Rand (72) aufweist, der nach innen abgerundet ist, der das offene Ende (73) des Raums (70) definiert.

11. Spender nach einem der vorhergehenden Ansprüche, wobei sich das offene Ende (73) des Raums (70) zu Beginn der Ansaugphase axial genau oberhalb der Einspritzöffnung (27) befindet.

12. Spender nach einem der vorhergehenden Ansprüche, wobei der Raum (70) eine axiale Höhe von 1 cm aufweist.

13. Spender nach einem der vorhergehenden Ansprüche, wobei das Tauchrohr (5) in dem fluiden Produkt (P) sichtbar ist.

## Claims

1. A fluid dispenser comprising:
· a fluid reservoir (1) containing fluid (P);
· a fluid suction chamber (C) of variable volume that includes an extraction and application space (70), the space (70) defining an open end (73) and a closed end (74), the space (70) communicating with the remainder of the chamber (C) via the open end (73);
· a dip tube (5) that connects the reservoir (1) to the chamber (C) at an injection orifice (27) that defines an injection axis (X); and
· suction means (25, 75) for sucking, during a suction stage, fluid (P) from the reservoir (1) into the chamber (C) through the injection orifice (27);
the dispenser being **characterized in that** the extraction and application space (70) is formed by a blind tube (7) of volume that is constant defining the open end (73) and the closed end (74), the injection orifice (27) being situated at the open end (73) of the blind tube (7), such that the fluid (P) is injected in the form of an axial jet into the extraction and application space (70) and fills it, at least in part, without the injection orifice (27) penetrating into the space (70).

2. A dispenser according to claim 1, wherein the injection orifice (27) is situated outside the extraction and application space (70), or slightly inside the extraction and application space (70).

3. A dispenser according to claim 1 or claim 2, wherein the blind tube (7) of constant volume is secured to a grip member (8) that is movable along the injection axis (X).

4. A dispenser according to claim 3, wherein the suction chamber (C) includes a shell (26) that, at its bottom end, defines the injection orifice (27), the tube (7) being disposed in the shell (26).

5. A dispenser according to claim 4, wherein the shell (26) defines a sealing slide-cylinder (25) in which there slides a piston (65) that is secured to the grip member (8) in such a manner as to create suction in the chamber (C) by pulling axially on the grip member (8).

6. A dispenser according to claim 5, wherein the increase in volume of the chamber (C) during the suction stage is slightly greater than the volume of the space (70).

7. A dispenser according to any one of claims 4 to 6, wherein the tube (7) and the shell (26) are transparent, such that the fluid (P) that fills the space (70) is visible through the tube (7) and the shell (26).

8. A dispenser according to any preceding claim, wherein the space (70) presents a configuration that is substantially axially cylindrical, defining an inside diameter of about 3 mm.

9. A dispenser according to any preceding claim, wherein the injection orifice (27) presents a diameter of about 1 mm.

10. A dispenser according to any one of claims 4 to 7, wherein the tube (7) includes a free bottom edge (72) that is rounded towards the inside, and that defines the open end (73) of the space (70).

11. A dispenser according to any preceding claim, wherein, at the start of the suction stage, the open end (73) of the space (70) is situated axially just above the injection orifice (27).

12. A dispenser according to any preceding claim, wherein the space (70) presents an axial height of about 1 cm.

13. A dispenser according to any preceding claim, wherein the dip tube (5) is invisible in the fluid (P).
